# EUROPÄISCHE PATENTSCHRIFT

(11) **EP 2 711 270 B1**
(45) Veröffentlichungstag und Bekanntmachung des Hinweises auf die Patenterteilung: **04.03.2020**
(21) Anmeldenummer: 13173737.1
(22) Anmeldetag: 26.06.2013
(51) Int. Cl.: B62D 21/02, B62D 27/06, B62D 21/18

(54) **Rahmen für ein insbesondere landwirtschaftliches Nutzfahrzeug**
Frame for an industrial especially agricultural vehicle
Châssis pour un véhicule utilitaire en particulier agricole

(30) Priorität: 25.09.2012 DE 102012018853
(43) Veröffentlichungstag der Anmeldung: 26.03.2014
(73) Patentinhaber: CLAAS Selbstfahrende Erntemaschinen GmbH, 33428 Harsewinkel (DE)
(72) Erfinder: Börgermann, Rainer, 49545 Tecklenburg (DE)
(74) Vertreter: CLAAS Gruppe

(56) Entgegenhaltungen:
- EP-A1- 2 392 485
- EP-A1- 2 404 811
- WO-A1-2009/017533
- US-A1- 2001 041 123

## Beschreibung

Die vorliegende Erfindung betrifft einen Rahmen, der einen tragenden Bestandteil der Karosserie eines Nutzfahrzeugs, insbesondere eines landwirtschaftlichen Nutzfahrzeugs, bildet.

Derartige Rahmen umfassen herkömmlicherweise zwei Längsträger sowie eine Mehrzahl von Traversen, die die Längsträger miteinander verbinden. Herkömmlicherweise sind die Traversen an den Längsträgern verschweißt. Die Belastbarkeit der Schweißverbindungen ist unter anderem eingeschränkt durch interne Spannungen, die auf den Schweißprozess und auf eine ungleichmäßige Temperaturverteilung in Längsträgern und Traversen während des Schweißens zurückgehen. Insbesondere bei landwirtschaftlichen Fahrzeugen, die bestimmungsgemäß viel auf unbefestigtem, stark unebenem Untergrund eingesetzt werden, kann ein solcher Rahmen starken Torsionskräften ausgesetzt sein, die zu Schäden an den Schweißverbindungen führen können. Wenn eine Schweißverbindung beschädigt wird, verringert dies erheblich die Torsionssteifigkeit des Rahmens, so dass ein Schaden an einer Schweißnaht, der nicht behoben wird oder nicht geeignet behoben werden kann, dazu neigt, weiterzuwachsen. Dies kann einen Totalschaden des Fahrzeugs zur Folge haben.

Aus EP 1 140 604 B1 ist ein Fahrzeugchassis mit Längsträgern und einer zwischen den Längsträgern verschraubten Traverse bekannt. Die als Hohlprofile ausgebildeten Längsträger erzielen zwar über ihre Länge hinweg eine hohe Torsionssteifigkeit, sind aber aufgrund ihrer geringen Wandstärke durch punktuelle Belastungen, etwa durch die die Traverse fixierenden Schrauben, relativ leicht verformbar, so dass eine Verstärkung durch seitlich angeklebte U-Profile erforderlich ist. Weitere ähnliche Fahrzeugrahmen sind von WO2009017533 und EP2404811 bekannt.

Aufgabe der Erfindung ist, einen Rahmen für ein Nutzfahrzeug zu schaffen, der eine hohe Belastbarkeit mit geringem Gewicht verbindet.

Die Aufgabe wird gelöst, indem bei einem Rahmen für ein insbesondere landwirtschaftliches Nutzfahrzeug wenigstens ein Längsträger einen vorderen und einen hinteren Vollprofilabschnitt und einen die Vollprofilabschnitte verbindenden Hohlprofilabschnitt aufweist. Das Vollprofil gewährleistet eine hohe lokale Biegefestigkeit und ist daher gut geeignet, um Achsen oder einen Träger für an dem Fahrzeug zu montierende Werkzeuge daran zu verankern. Indem der Längsträger zwischen den Vollprofilabschnitten als Hohlprofilabschnitt ausgebildet ist, kann eine hohe Torsionsfestigkeit in Bezug auf von außen auf den Rahmen einwirkende Drehmomente, insbesondere von den Achsen oder an das Fahrzeug angekoppelten Werkzeugen ausgeübte Drehmomente, bei gleichzeitig geringem Gewicht erreicht werden.

Um bug- und heckmontierte Werkzeuge tragen zu können, sollte der Längsträger sich zweckmäßigerweise über die ganze Länge des Fahrzeugs erstrecken

Die Voll- und Hohlprofilabschnitte sind durch Schrauben verbunden. So können die Belastbarkeit einer Verbindung einschränkende thermische Spannungen, wie sie beim Schweißen entstehen, vermieden werden; gleichzeitig erleichtert die Verwendung von Schrauben im Falle eines Schadens am Rahmen dessen Reparatur, da einzelne Teile ausgetauscht werden können.

Der Hohlprofilabschnitt umfasst zwei Seitenwände, die in einem Überlappungsbereich mit einem der Vollprofilabschnitte an einander gegenüberliegenden Oberflächen des plattenförmigen Vollprofils anliegen. Da der Vollprofilabschnitt einem auf die einander gegenüberliegenden Oberflächen einwirkenden Druck nicht nachgeben kann, können mit Hilfe der Schrauben die Seitenwände des Hohlprofilabschnitts sehr fest an den Vollprofilabschnitt angepresst werden; eine Verformung oder gar ein Kollabieren des Hohlprofilabschnitts unter der dabei einwirkenden Kraft ist ausgeschlossen.

Die Seitenwände können sich insbesondere eben über die gesamte Länge des Hohlprofilabschnitts erstrecken.

Die Steifigkeit des Rahmens ist in dem Überlappungsbereich zwischen den Seitenwänden des Hohlprofilabschnitts und dem Vollprofilabschnitt am höchten. Daher ist der Überlappungsbereich besonders gut geeignet, um daran eine Achse des Fahrzeugs zu befestigen.

Zweckmäßigerweise sind die Schrauben jeweils von einer Hülse umgeben, die sich durch überlappende Durchgangsöffnungen des Hohlprofilabschnitts und des Vollprofilabschnitts erstreckt. Eine solche Hülse kann die Schraube vor Scherbelastung, vor einer Beschädigung ihres Gewindes und vor Eingeklemmtwerden schützen, falls bei einer Überbelastung Voll- und Hohlprofilabschnitt sich gegeneinander verschieben. So ist sichergestellt, dass die Schraube auch nach langem Gebrauch des Fahrzeugs noch gelöst werden kann, und dass, wenn nötig, schadhaft gewordene Teile des Rahmens ausgetauscht werden können.

Die Länge der Hülse sollte kleiner sein als die Gesamtlänge der Durchgangsöffnungen, in denen sie sich erstreckt, um sicherzustellen, dass eine zwischen Kopf und Mutter der Schrauben wirkende Spannkraft die Profilabschnitte gegeneinander gepresst hält und nicht von der Hülse abgefangen wird.

Die Hülse kann einen Längsschlitz aufweisen, um eine Verformung der Hülse beim Einführen in die Durchgangsöffnungen oder im Falle einer Verschiebung der Profilabschnitte gegeneinander zu ermöglichen.

Vorzugsweise besteht die Hülse aus Federstahl.

Die Schrauben sind in Durchgangsöffnungen des Hohlprofilabschnitts und des Vollprofilabschnitts vorzugsweise mit radialem Spiel aufgenommen. Ein solches Spiel ermöglicht im Falle einer Belastung eine Verschiebung der Profilabschnitte gegeneinander. Die dabei auftretende Reibung dissipiert auf den Rahmen einwirkende Verformungsenergie, bevor eine Schraube oder die sie umgebende Hülse belastet wird, und reduziert dadurch die Scherbeanspruchung, der die Hülse oder Schraube ausgesetzt ist.

Ein Hohlprofilabschnitt mit der für einen hoch belastbaren Rahmen eines landwirtschaftlichen Nutzfahrzeugs erforderlichen Wandstärke kann zweckmäßigerweise aus Seitenwandplatten und zwischen den Seitenwandplatten eingefügten Abstandhalterprofilen zusammengesetzt sein.

Die Abstandhalterprofile und die Seitenwandplatten können miteinander verschweißt sein; in Betracht kommt aber auch eine Schraubverbindung analog derjenigen zwischen den Seitenwänden des Hohlprofilabschnittes und den Vollprofilabschnitten.

Um den Rahmen zu bilden, ist der oben beschriebene Längsträger mit einem zweiten Längsträger im Allgemeinen durch eine oder mehrere Traversen verbunden. Wenigstens eine dieser Traversen kann an den Längsträgern ebenfalls durch Schrauben befestigt sein.

Um eine Verformung des Hohlprofilabschnitts durch die Traverse haltende Schrauben zu vermeiden, sind zweckmäßigerweise zwischen die Seitenwandplatten des Hohlprofilabschnitts von den Schrauben durchsetzte Abstandhalter eingefügt.

Ein solcher Abstandhalter kann jeweils ein einzelnes Durchgangsloch oder Durchgangsöffnungen für mehrere Schrauben aufweisen.

Eine Vereinfachung des Zusammenbaus ergibt sich, wenn der Abstandhalter einteilig mit einem der Vollprofilabschnitte oder, wenn vorhanden, einem der Abstandhalterprofile ausgebildet ist.

Die Traverse ist vorzugsweise als Rohr mit an den Enden des Rohrs ausgebildeten, an den Längsträgern verschraubten Flanschen ausgebildet. Vorzugsweise erstrecken sich die Flansche ringförmig um eine Mantelfläche des Rohrs herum.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: eine perspektivische Ansicht eines erfindungsgemäßen Rahmens;
- Fig. 2: ein Detail des Rahmens in auseinandergezogener Darstellung;
- Fig. 3: einen vergrößerten Schnitt durch ein Detail des Rahmens;
- Fig. 4: einen Abstandhalter gemäß einer zweiten Ausgestaltung der Erfindung; und
- Fig. 5: einen Abstandhalter gemäß einer dritten Ausgestaltung der Erfindung

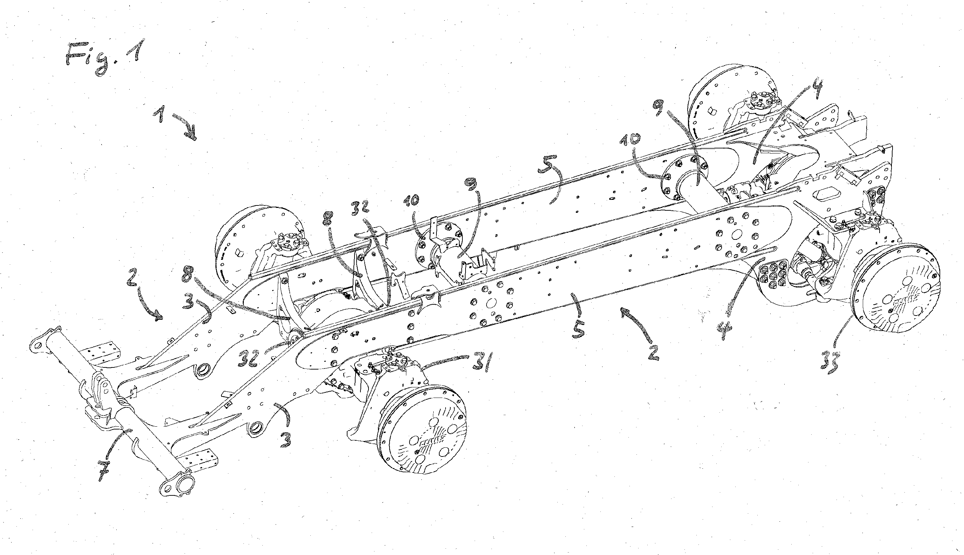

Fig. 1 zeigt in perspektivischer Ansicht einen tragenden Rahmen 1 für das Chassis eines landwirtschaftlichen Nutzfahrzeugs, hier eines Traktors. Der Rahmen 1 umfasst zwei Längsträger 2, die, über ihre Länge verteilt, durch eine Mehrzahl von Traversen verbunden sind. Die Längsträger 2 sind jeweils gegliedert in einen vorderen Vollprofilabschnitt 3, einen hinteren Vollprofilabschnitt 4 und einen die Abschnitte 3, 4 verbindenden Hohlprofilabschnitt 5.

Die Traversen, die die Längsträger 2 miteinander verbinden, können unterschiedlich ausgestaltet sein; so zeigt die Figur z.B. eine vordere rohrförmige Traverse 7, die an den vorderen Spitzen der Vollprofilabschnitte 3 angebracht ist, und seitwärts über diese hinaus greift, um als Stütze für ein nicht dargestelltes, am Bug des Traktors montiertes Werkzeug zu dienen. Weitere, fachwerkartig strukturierte Traversen 8 verbinden die Längsträger 2 mit einer Vorderachse 31. Die Traversen 8 weisen jeweils ein in Fig. 1 weitgehend durch einen der Längsträger verdecktes Lager 32 auf, in dem die Vorderachse 31 um eine zur Fahrzeuglängsrichtung parallele Achse schwenkbar gehalten ist.

Eine Hinterachse 33 ist starr an den beiden hinteren Vollprofilabschnitten 4 befestigt.

Zwei rohrförmige Traversen 9 sind an ihren Enden mit ringsum abstehenden, jeweils an einer inneren Wand der Hohlprofilabschnitte 5 anliegenden Flanschen 10 versehen.

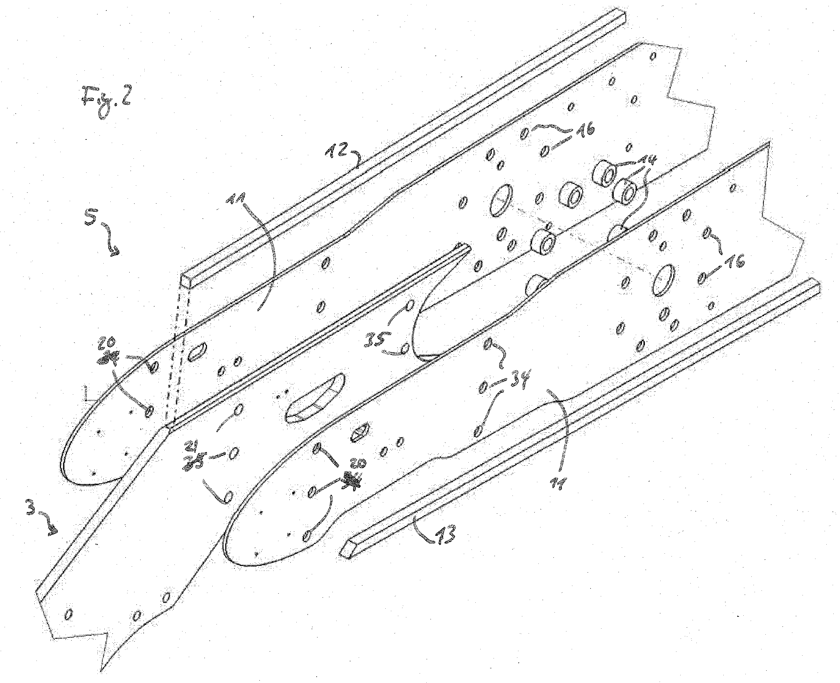

Fig. 2 zeigt einen Verbindungsbereich zwischen vorderem Vollprofilabschnitt 3 und Hohlprofilabschnitt 5 eines Längsträgers 2 in einer vergrößerten auseinandergezogenen Darstellung. Der Vollprofilabschnitt 3 ist als eine massive, vorzugsweise ebene Platte ausgebildet. Der Hohlprofilabschnitt 5 setzt sich zusammen aus zwei ebenen Seitenwänden 11 und oberen und unteren Abstandshalterprofilen 12, 13, auch als Überzug bzw. Unterzug bezeichnet. Miteinander deckungsgleiche Gruppen von Durchgangsöffnungen 20, 21 der Seitenwände 11 und des Vollprofilabschnitts 3 sind vorgesehen, um Schrauben zum Befestigen der Traversen 8 aufzunehmen. Durchgangsöffnungen 16 für die Verschraubung der vorderen rohrförmigen Traverse 9 sind in einem nicht mit dem Vollprofilabschnitt 3 überlappenden Bereich der Seitenwände 11 angeordnet. Damit die Seitenwände 11 von in diesen Durchgängen 16 angebrachten Schrauben nicht gegeneinander gedrückt werden, sind sie durch Zwischenringe 14 auf Distanz gehalten.

Der Hohlprofilabschnitt 5 wird zusammengefügt, indem die Zwischenringe 14 provisorisch an einer Seitenwand 11 befestigt werden, so dass jeweils eine Öffnung 15 eines Zwischenrings 14 mit einer der Öffnungen 16 der Seitenwand 10 fluchtet, und die zweite Seitenwand 11 auf die Zwischenringe 14 aufgelegt wird und in den dadurch freigehaltenen Zwischenraum zwischen den Seitenwänden 11 die Abstandhalterprofile 12, 13 eingeschoben und entlang der Ränder der Seitenwände 11 verschweißt werden.

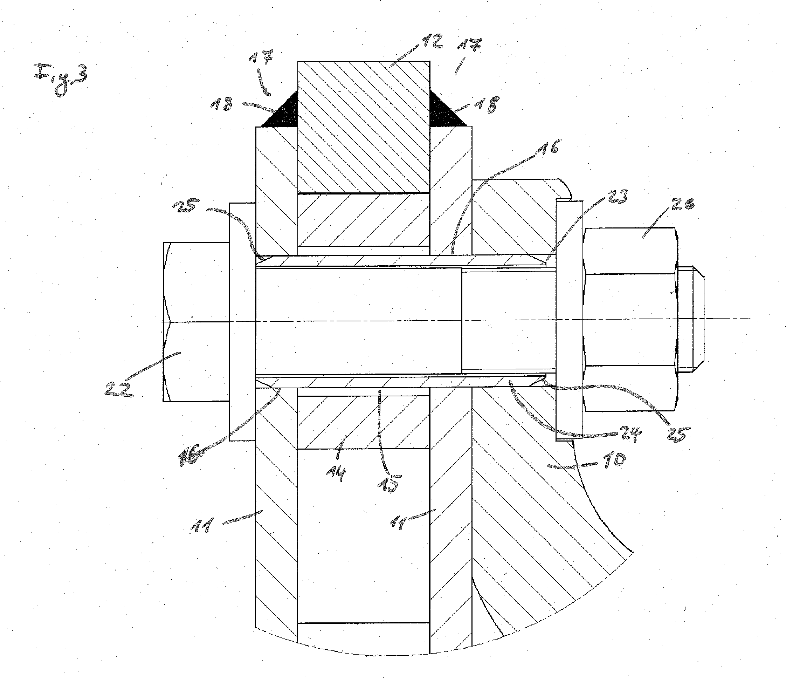

Wie in Fig. 3 zu erkennen, haben die Zwischenringe 14 und die Abstandhalterprofile 12, 13 gleiche Wandstärken, so dass sie den Zwischenraum zwischen den Seitenwänden 11 exakt ausfüllen. Die Abstandhalterprofile 12, 13 sind nicht vollständig in den Zwischenraum zwischen den Seitenwänden 11 eingeschoben; im hier gezeigten Fall begrenzt einer der Zwischenringe 14 die Tiefe, bis zu der die Abstandhalterprofile 12, 13 eingeschoben werden können, so dass ein Teil von diesen aus dem Zwischenraum zwischen den Seitenwänden 11 vorsteht und die Abstandhalterprofile 12, 13 mit den Rändern der Seitenwände jeweils eine Hohlkehle 17 bilden, in der bequem eine sich über die gesamte Länge der Abstandhalterprofile 12, 13 erstreckende Schweißnaht 18 erzeugt werden kann.

Die Wandstärke der Abstandhalterprofile 12, 13 und der Zwischenringe 14 entspricht derjenigen der Vollprofilabschnitte 3, 4, so dass letztere von vorn bzw. hinten zwischen die Seitenwände 11 des Hohlprofilabschnitts 5 eingeschoben werden können, bis die Durchgangsöffnungen 20, 21 der Seitenwände 11 und des vorderen Vollprofilabschnitts 3 miteinander fluchten.

In die Durchgangsöffnungen 15, 16 bzw. 20, 21 eingeführte Schrauben 22 halten, wie in Fig. 3 am Beispiel der Durchgangsöffnungen 15, 16 gezeigt, die Seitenwände 11 und den dazwischen liegenden Zwischenring 14 oder Vollprofilabschnitt 3 fest gegeneinander gedrückt. Im Falle der Durchgangsöffnungen 15, 16 durchsetzen die Schrauben 22 auch noch Durchgangsöffnungen 23 eines der Flansche 10, im Falle der Durchgangsöffnungen 20, 21 auch noch solche der Traversen 8.

Die Schäfte der Schrauben 22 sind radial spielhaltig umgeben von Hülsen 24. Die Hülsen 24 sind aus Federstahl gefertigt und jeweils mit einem Längsschlitz versehen, um einer radial orientierten Kraft ein Stück weit elastisch nachgeben zu können. Wenn die Hülsen 24, wie in Fig. 3 gezeigt, an wenigstens einem ihrer Enden 25 kegelförmig angespitzt sind, kann ihr Durchmesser im entspannten Zustand geringfügig größer sein als der der Durchgangsöffnungen 15, 16, 23; indem die Hülsen 24 in die Durchgangsöffnungen hineingetrieben werden, geraten sie unter Vorspannung und sorgen für eine exakte Ausrichtung der Durchgangsöffnungen 15, 16, 23 zueinander.

Die Breite des Längsschlitzes ist so bemessen, dass selbst wenn die ihn begrenzenden Ränder der Hülse 24 einander berühren, der freie Durchmesser in ihrem Inneren etwas größer bleibt als der der sich hindurch erstreckenden Schraube 22. So ist ein Festklemmen der Schraube 22 selbst dann ausgeschlossen, wenn die Durchgangsöffnungen 15, 16, 23 gegeneinander aufgrund einer Überbeanspruchung verrutscht sind.

Die Länge der Hülsen 24 ist geringfügig kleiner als die kumulierte Länge der Durchgangsöffnungen 15, 16, 23, durch die sie sich erstrecken, so dass, wenn eine Mutter 26 auf der Schraube 22 festgezogen wird, die resultierende Spannkraft nicht von der Hülse 24 abgefangen wird, sondern, im Falle der Fig. 3, den Flansch 10 fest an den Hohlprofilabschnitt 5 presst bzw., im Falle der Durchgangsöffnungen 20, 21, den Vollprofilabschnitt 3 zwischen den Seitenwänden 11 klemmt.

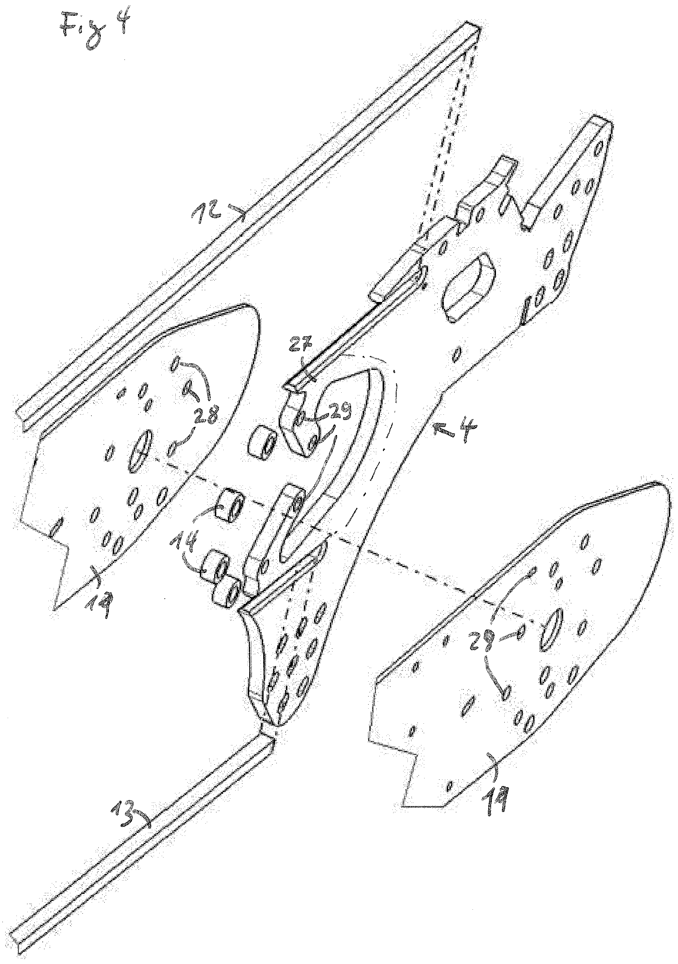

Fig. 4 zeigt in einer auseinandergezogenen perspektivischen Ansicht das hintere Ende des Hohlprofilabschnitts 5 und den hinteren Vollprofilabschnitt 4. Ein vorderer Bereich 27 des Vollprofilabschnitts 4 ist vorgesehen, um in den Hohlprofilabschnitt 5 eingeschoben und zwischen dessen Seitenwänden 11 geklemmt zu werden. Gleichzeitig übernimmt der Bereich 27 hier zum Teil die Funktion der Zwischenringe 14, indem er mit zu Durchgangsöffnungen 28 der Seitenwände 11 und entsprechenden Durchgangsöffnungen des (in Fig. 4 nicht gezeigten) Flansches 10 der hinteren rohrförmigen Traverse 9 kongruenten Durchgangsöffnungen 29 versehen ist.

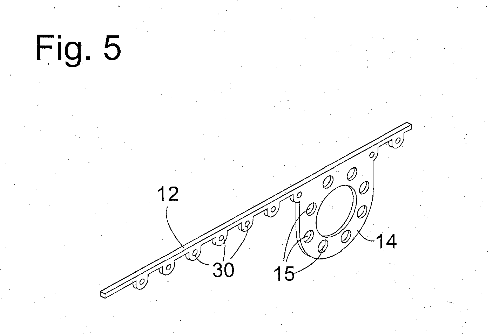

Fig. 5 zeigt eine Variante, der zufolge die Zwischenringe 14 mit einem der Abstandhalterprofile, hier dem oberen Profil 12, einteilig verschmolzen ist.

Ein zweiter, unabhängig von der Verschmelzung realisierbarer Unterschied zwischen Fig. 5 und den zuvor betrachteten Ausgestaltungen ist, dass das Abstandhalterprofil 12 hier mit einer Vielzahl von Durchgangsöffnungen 30 versehen ist. Entsprechende Durchgangsöffnungen können auch am unteren Abstandhalterprofil 13 vorgesehen sein. Zusammen mit nicht dargestellten Durchgangsöffnungen entlang der oberen und unteren Ränder der Seitenwände 11 erlauben es diese, den Hohlprofilabschnitt 5 ausschließlich durch Verschrauben zusammenzufügen. Ein Schweißen beim Zusammenfügen des Hohlprofilabschnitts 5 kann somit völlig vermieden werden, und es wird ein von thermischen Spannungen freier Hohlprofilabschnitt 5 erhalten.

### Bezugszeichen

- 1.: Rahmen
- 2: Längsträger
- 3: vorderer Vollprofilabschnitt
- 4: hinterer Vollprofilabschnitt
- 5: Hohlprofilabschnitt
- 6: Durchgangsöffnung
- 7: rohrförmige Traverse
- 8: fachwerkartige Traverse
- 9: rohrförmige Traverse
- 10: Flansch
- 11: Seitenwand
- 12: Abstandhalterprofil
- 13: Abstandhalterprofil
- 14: Abstandhalter
- 15: Durchgangsöffnung
- 16: Durchgangsöffnung
- 17: Hohlkehle
- 18: Schweißnaht
- 19: Linie
- 20: Durchgangsöffnung
- 21: Durchgangsöffnung
- 22: Schraube
- 23: Durchgangsöffnung
- 24: Hülse
- 25: Ende
- 26: Mutter
- 27: vorderer Bereich
- 28: Durchgangsöffnung
- 29: Durchgangsöffnung
- 30: Durchgangsöffnung
- 31: Vorderachse
- 32: Lager
- 33: Hinterachse

## Patentansprüche

1. Rahmen für ein insbesondere landwirtschaftliches Nutzfahrzeug, mit wenigstens einem Längsträger (2), wobei der Längsträger (2) einen vorderen und einen hinteren Vollprofilabschnitt (3; 4) und einen die Vollprofilabschnitte (3; 4) verbindenden Hohlprofilabschnitt (5) umfasst, **dadurch gekennzeichnet, dass** der Vollprofilabschnitt (3) als eine massive, ebene Platte ausgebildet ist und Voll- und Hohlprofilabschnitte (3, 4; 5) durch Schrauben (22) verbunden sind, und der Hohlprofilabschnitt (5) zwei Seitenwände (11) umfasst, die an einander gegenüberliegenden Oberflächen des plattenförmigen Vollprofilabschnitts (3; 4) anliegen.

2. Rahmen nach Anspruch 1, **dadurch gekennzeichnet, dass** eine Achse an einem der Vollprofilabschnitte (3, 4) befestigt ist.

3. Rahmen nach Anspruch 1 oder 2, **dadurch gekennzeichnet, dass** die Achse an einem mit den Seitenwänden (11) überlappenden Bereich des Vollprofilabschnitts (3) befestigt ist.

4. Rahmen nach Anspruch 1 oder 3, **dadurch gekennzeichnet, dass** die Schrauben (22) jeweils von einer Hülse (24) umgeben sind, die sich durch überlappende Durchgangsöffnungen (20, 21; 28, 29) des Hohlprofilabschnitts (5) und des Vollprofilabschnitts (3; 4) erstreckt.

5. Rahmen nach Anspruch 4, **dadurch gekennzeichnet, dass** die Länge der Hülse (24) kleiner ist als die Gesamtlänge der Durchgangsöffnungen (20, 21; 28, 29), in denen sie sich erstreckt.

6. Rahmen nach Anspruch 4 oder 5, **dadurch gekennzeichnet, dass** die Hülse (24) einen Längsschlitz aufweist.

7. Rahmen nach einem der Ansprüche 1 oder 3 bis 6, **dadurch gekennzeichnet, dass** die Schrauben (22) in Durchgangsöffnungen 20, 21; 28, 29) des Hohlprofilabschnitts (5) und des Vollprofilabschnitts (3; 4) mit radialem Spiel aufgenommen sind.

8. Rahmen nach einem der vorhergehenden Ansprüche, **dadurch gekennzeichnet, dass** der Hohlprofilabschnitt (5) aus Seitenwandplatten (11) und zwischen die Seitenwandplatten (11) eingefügten Abstandhalterprofilen (12; 13) zusammengesetzt ist.

9. Rahmen nach Anspruch 8, **dadurch gekennzeichnet, dass** die Abstandhalterprofile (12, 13) und die Seitenwandplatten (11) verschweißt oder durch Schrauben verbunden sind.

10. Rahmen nach einem der vorhergehenden Ansprüche, **dadurch gekennzeichnet, dass** der Längsträger (2) mit einem zweiten Längsträger (2) über eine an beiden Längsträgern verschraubte Traverse (9) verbunden ist.

11. Rahmen nach Anspruch 10, **dadurch gekennzeichnet, dass** Schrauben (22), durch die die Traverse (9) an einem Hohlprofilabschnitt (5) der Längsträger (2) verschraubt ist, zwischen den Seitenwandplatten (11) eingefügte Abstandhalter (14; 27) durchsetzen.

12. Rahmen nach Anspruch 11, **dadurch gekennzeichnet, dass** der Abstandhalter (27) einteilig mit einem der Vollprofilabschnitte (4) ausgebildet ist.

13. Rahmen nach einem der Ansprüche 9 bis 12, **dadurch gekennzeichnet, dass** die Traverse (9) als Rohr mit an den Enden des Rohrs ausgebildeten, an den Längsträgern (2) verschraubten Flanschen (10) ausgebildet ist.

## Claims

1. A frame for an in particular agricultural utility vehicle comprising at least one longitudinal bearer (2), wherein the longitudinal bearer (2) includes a front and a rear solid profile portion (3; 4) and a hollow profile portion (5) connecting the solid profile portions (3; 4), **characterised in that** the solid profile portion (3) is in the form of a massive flat plate and the solid and hollow profile portions (3, 4; 5) are connected by screws (22), and the hollow profile portion (5) includes two side walls (11) which bear against mutually opposite surfaces of the plate-shaped solid profile portion (3; 4).

2. A frame according to claim 1 **characterised in that** an axle is fixed to one of the solid profile portions (3, 4).

3. A frame according to claim 1 or claim 2 **characterised in that** the axle is fixed at a region of the solid profile portion (3), that overlaps with the side walls (11).

4. A frame according to claim 1 or claim 3 **characterised in that** the screws (22) are respectively surrounded by a sleeve (24) which extends through overlapping passage openings (20, 21; 28, 29) of the hollow profile portion (5) and the solid profile portion (3;4).

5. A frame according to claim 4 **characterised in that** the length of the sleeve (24) is less than the overall length of the passage openings (20, 21; 28, 29) in which it extends.

6. A frame according to claim 4 or claim 5 **characterised in that** the sleeve (24) has a longitudinal slot.

7. A frame according to one of claims 1 or 3 to 6 **characterised in that** the screws (22) are received with radial play in passage openings (20, 21; 28, 29) of the hollow profile portion (5) and the solid profile portion (3; 4).

8. A frame according to one of the preceding claims **characterised in that** the hollow profile portion (5) is composed of side wall plates (11) and spacer profile members (12; 13) introduced between the side wall plates (11).

9. A frame according to claim 8 **characterised in that** the spacer profile members (12, 13) and the side wall plates (11) are welded or connected by screws.

10. A frame according to one of the preceding claims **characterised in that** the longitudinal bearer (2) is connected to a second longitudinal bearer (2) by way of a transverse member (9) screwed to both longitudinal bearers.

11. A frame according to claim 10 **characterised in that** screws (22) by which the transverse member (9) is screwed to a hollow profile portion (5) of the longitudinal bearers (2) pass through spacers (14; 27) introduced between the side wall plates (11).

12. A frame according to claim 11 **characterised in that** the spacer (27) is in one piece with one of the solid profile portions (4).

13. A frame according to one of claims 9 to 12 **characterised in that** the transverse member (9) is in the form of a tube having flanges (10) which are provided at the ends of the tube and which are screwed to the longitudinal bearers (2).

## Revendications

1. Châssis pour un véhicule utilitaire, en particulier agricole, comprenant au moins un longeron (2), le longeron (2) incluant une portion profilée pleine avant et une portion profilée pleine arrière (3 ; 4), et une portion profilée creuse (5) reliant les portions profilées pleines (3 ; 4), **caractérisé en ce que** la portion profilée pleine (3) est conformée en une plaque massive plane, et les portions profilées pleines et creuse (3, 4 ; 5) sont reliées par des vis (22), et la portion profilée creuse (5) comporte deux parois latérales (11) qui sont appliquées contre des surfaces opposées l'une à l'autre de la portion profilée pleine en forme de plaque (3 ; 4).

2. Châssis selon la revendication 1, **caractérisé en ce qu'**un essieu est fixé à une des portions profilées pleines (3, 4).

3. Châssis selon la revendication 1 ou 2, **caractérisé en ce que** l'essieu est fixé à une zone de la portion profilée pleine (3) qui se recouvre avec les parois latérales (11).

4. Châssis selon la revendication 1 ou 3, **caractérisé en ce que** les vis (22) sont entourées respectivement par un manchon (24) qui traverse des trous débouchants coïncidents (20, 21 ; 28, 29) de la portion profilée creuse (5) et de la portion profilée pleine (3 ; 4).

5. Châssis selon la revendication 4, **caractérisé en ce que** la longueur du manchon (24) est inférieure à la longueur totale des trous débouchants (20, 21 ; 28, 29) dans lesquels il s'étend.

6. Châssis selon la revendication 4 ou 5, **caractérisé en ce que** le manchon (24) comporte une fente longitudinale.

7. Châssis selon la revendication 1 ou 3 à 6, **caractérisé en ce que** les vis (22) sont reçues dans des trous débouchants (20, 21 ; 28, 29) de la portion profilée creuse (5) et de la portion profilée pleine (3 ; 4) avec un jeu radial.

8. Châssis selon une des revendications précédentes, **caractérisé en ce que** la portion profilée creuse (5) est constituée de plaques de paroi latérales (11) et de profilés d'entretoisement (12 ; 13) insérés entre les plaques de paroi latérales (11) .

9. Châssis selon la revendication 8, **caractérisé en ce que** les profilés d'entretoisement (12, 13) et les plaques de paroi latérales (11) sont soudés ou reliés par des vis.

10. Châssis selon une des revendications précédentes, **caractérisé en ce que** le longeron (2) est relié à un second longeron (2) par l'intermédiaire d'une traverse (9) vissée aux deux longerons.

11. Châssis selon la revendication 10, **caractérisé en ce que** des vis (22), au moyen desquelles la traverse (9) est vissée à une portion profilée creuse (5) des longerons (2), traversent des entretoises (14, 27) insérées entre les plaques de paroi latérales (11).

12. Châssis selon la revendication 11, **caractérisé en ce que** l'entretoise (27) est conçue d'un seul tenant avec une des portions profilées pleines (4) .

13. Châssis selon une des revendications 9 à 12, **caractérisé en ce que** la traverse (9) est conformée en tube avec des collets (10) conformés aux extrémités du tube et vissés aux longerons (2) .
